(19) Europäisches Patentamt
European Patent Office
Office européen des brevets

(11) Publication number: 0 216 147
A2

# (12) EUROPEAN PATENT APPLICATION

(21) Application number: 86111515.2

(22) Date of filing: 20.08.86

(51) Int. Cl.[4]: C 08 F 8/00
C 08 F 220/58

(30) Priority: 22.08.85 US 768521

(43) Date of publication of application:
01.04.87 Bulletin 87/14

(84) Designated Contracting States:
AT BE CH DE FR GB IT LI NL SE

(71) Applicant: HENKEL CORPORATION
7900 West 78th Street
Minneapolis Minnesota 55435(US)

(72) Inventor: Howland, Warren
12111 N. Miss. Drive
Champlin MN 55316(US)

(74) Representative: von Kreisler, Alek, Dipl.-Chem. et al,
Deichmannhaus am Hauptbahnhof
D-5000 Köln 1(DE)

## (54) Covalently crosslinked copolymer absorbent.

(57) Super-absorbent covalently crosslinked copolymers are prepared by reacting a homopolymer of acrylamido hydrocarbon sulfonic acid or an amine salt or a monomer precursor thereof with an allylic crosslinking agent. These copolymers are compatible with a wide variety of materials and can be used wherever superior aqueous fluid absorption and retention is required. Typical applications for these copolymers are in absorbent softgoods and in agricultural areas.

EP 0 216 147 A2

# COVALENTLY CROSSLINKED COPOLYMER ABSORBENT

## BACKGROUND OF THE INVENTION

1. Field of the Invention

This invention relates to novel covalently crosslinked copolymers having the ability to absorb and retain relatively large amounts of aqueous fluids and to a process for preparing such covalently crosslinked copolymer absorbents. These covalently crosslinked polymers can be combined with or coated on a wide variety of materials wherever superior aqueous fluid absorption and retention properties are required, or wherever there is a need to handle large amounts of aqueous fluids or aqueous fluid containing materials in a non-liquid, semi-solid state.

2. Description of the Related Art

United States Patent No. 3,661,815 to Smith, disclosed granular water-swellable, water-absorbing but water-insoluble alkali metal carboxylate salts of starch-acrylonitrile graft copolymers. The superabsorbing graft copolymers are produced by basic saponification of starch poly-acrylonitrile graft copolymers in an aqueous alcoholic medium. A variety of starches were used, including corn, waxy maize, tapioca and

potato starches, and the mole ratio of the starch to acrylonitrile is generally in the range of 1:3 to 1:30. The graft copolymer granular solids are reported to absorb water in excess of 50 parts of water per part of graft copolymer.

United States Patent No, 3,669,103 to Harper, et al. is directed to dry, solid, water-swellable, water insoluble polymeric absorbents which are lightly crosslinked polymers, such as polyvinylpyrolidones, sulfonated polystyrenes, sulfonated polyvinyltoluenes, polysulfoethyl acrylates, poly-2-hydroxyethyl acrylates, polyacrylates, hydrolyzed polyacrylamides and copolymers of acrylamide with acrylic acid. Generally, from about 0.05 to about 1.5 percent of crosslinking agent per weight of total polymeric mixture is used. These polymers are then able to absorb and hold aqueous fluids in a generally stable manner.

United States Patent No. 3,670,731 to Harmon disclosed absorbent dressings which have been treated with hydrocolloidal compositions to enable these dressings to absorb 15 to 70 times their own weight in body exudates and to hold these amounts against release during normal activity of the wearer. The hydrocolloidal compositions employed are generally a hydrocolloid polymer material having from about 35 to 72 percent of this molecular structure composed of hydrophilic groups, and whose polymeric network has been crosslinked to introduce a limited water insolubility into the molecule.

A technical bulletin formerly available from General Mills Chemicals, Inc., a Henkel Company, entitled <u>SGP ABSORBENT POLYMER</u>, discloses a "super" absorbent of a natural polymer, starch, and a synthetic polymer of sodium acrylate and acrylamide, prepared by alkaline hydrolysis of starch-g-poly(acrylonitrile). In use, particles of SGP polymer will swell and absorb aqueous fluids until saturated, typically absorbing

800-1200 ml of deionized water per gram of polymer and 70-90 ml of human urine per gram of polymer. The SGP absorbent polymer finds use in typical applications including absorbent softgoods, agricultural areas, and other areas where super absorbency of aqueous fluids is required.

## SUMMARY OF THE INVENTION

This invention relates to a super absorbent, covalently crosslinked polymer of

a) a homopolymer of acrylamido hydrocarbon sulfonic acid having as the major recurring structural unit:

$$-(CH_2-CH(C(O)NH-R-SO_3M))-$$

wherein R is a divalent hydrocarbon group and M is a hydrogen atom, an alkali metal atom, or an amine group,

b) covalently crosslinked with an allylic crosslinking agent.

The crosslinked polymer may be represented by the idealized formula

$$A(B)_n$$

where B is the residue moiety of homopolymer of an acrylamido hydrocarbon sulfonic acid and A is the residue of the allylic crosslinking agent and n is an integer of 2-8 dependent on the number of allylic groups in the crosslinking agent.

In the presence of aqueous fluids, the super absorbent polymer of this invention will swell and absorb until saturated, but will not dissolve. Typically, the polymer will absorb up to about 3400 ml of water per gram of polymer and up to about 169 ml of synthetic urine per gram of polymer. The allylic crosslinking agent is generally present in amounts ranging from about 0.005% to about 2.0% by weight of the copolymer reactants.

As used herein, the term "amine group" shall be

used to refer to residues obtained by neutralizing the acrylamido hydrocarbon sulfonic acid or polymer thereof with ammonia or an organic amine. Examples of suitable organic amines include monoalkyl amines such as methylamine and butylamine, trialkylamines, such as trimethylamine and triethylamine, and trialkanolamines such as triethanolamine.

This invention also relates to a method of preparing a super absorbent covalently crosslinked polymer by reacting

a) a homopolymer of acrylamido hydrocarbon sulfonic acid having as the major recurring structural unit:

$$-(CH_2-CH(C(O)NH-R-SO_3M))-$$

as described herein above, with

b) a allylic crosslinking agent.

DETAILED DESCRIPTION OF THE INVENTION

The super absorbent covalently crosslinked polymers of this invention are prepared from homopolymers derived from an acrylamido hydrocarbon sulfonic acid or an amide or a salt thereof, wherein the major recurring structural unit is

$$-(CH_2-CH(C(O)NH-R-SO_3M))-.$$

Such polymers suitable for use in preparing the super absorbents of the present invention are described in United States Patents Nos. 3,692,673 and 4,107,057 and in commonly owned United States Application Serial No. 690,562, filed January 11, 1985, all of which are expressly incorporated herein by reference thereto. The preferred homopolymers for use in this invention are derived from 2-acrylamido-2-methylpropane sulfonic acid or an alkali metal or an amine salt thereof.

This homopolymer of acrylamido hydrocarbon sulfonic acid will preferably have a molecular weight between about 50,000 and about 10,000,000. More preferably,

the molecular weight of the homopolymer is about 1 to 5 million with about four million being preferred.

To determine the molecular weight of the preferred homopolymers to be used in preparing the covalently crosslinked polymers of this invention, that is, homopolymers of 2-acrylamido-2-methylpropane sulfonic acid or a salt thereof, the intrinsic viscosity of the polymer can be used in the Mark-Houwink equation:

$$[n] = KM^{\underline{a}}$$

wherein n is the intrinsic viscosity, M is the molecular weight and K and a are constants for the particular polymer-solvent combination. Values of K and a are extensively tabulated in the Polymer Handbook, Brandrum and Immergent (1975). Because the values of K and a are not tabulated for poly(2-acrylamido-2-methylpropane sulfonic acid), the values for poly(acrylic acid) are used in the Mark-Houwink equation to determine the molecular weight of the preferred homopolymers useful in this invention.

The preferred means of preparing the homo-polymers of acrylamido hydrocarbon sulfonic acid is by aqueous redox polymerization which may be effected by standard redox polymerization techniques using standard redox catalysts. Examples of suitable redox catalysts include ammonium bisulfite, ferrous sulfate, hydrogen peroxide, and sodium metabisulfite. It is desirable to exclude oxygen from the reaction as it may inhibit the polymerization process. A suitable manner of excluding oxygen is by purging the reaction mixture, for example, with nitrogen, prior to the initiation of the polymerization reaction. Ambient temperature is suitable. The molecular weight of the homopolymer so obtained will range from about 50,000 to about 5,000,000 as determined by its intrinsic viscosity. Chain transfer agents such as mercaptosuccinic acid may be employed in the polymerization reaction to obtain homopolymers of the desired molecular weight.

The allylic crosslinking agent used in forming the covalently crosslinked copolymer by reaction with the acrylamido hydrocarbon sulfonic acid homopolymer described above is a least partly water soluble and contains two or more ethylenically unsaturated allyl groups with a molecular structure which will allow polymerization matching with the acrylamido homopolymer. Suitable crosslinking agents of this type are those generally well-known in the art. Representative examples of such allylic crosslinking agents include N,N'-methylene bisacrylamide, (alkylidene bisacrylamide compounds in which the alkylidene group contains 1-3 carbon atoms), N,N-diallylmelamine, triallyl phosphate, triallyl cyanurate, tetraallyloxyethane, diemthylpropyl methacrylamide, diallyl sucrose, methacrylamide propyltrimethyl ammonium, N-methylolacrylamide, 1,6-hexanediol diacrylate, triethylene glycol diacrylate, tetraethylene glycol diacrylate, polyethylene glycol dimethacrylate. Other examples of suitable allylic crosslinking agents are recited in United States Patent No. 4,107,057, which is hereby incorporated by reference.

The preparation of the covalently crosslinked polymeric absorbents of the present invention is effected by the copolymerization of a) a homopolymer of acrylamido hydrocarbon sulfonic acid having as the major recurring structural unit:

$$-(CH_2-CH(C(O)NH-R-SO_3$$

wherein R is a divalent hydrocarbon group and M is a hydrogen atom, an alkali metal atom, or an amine group, with b) an allylic crosslinking agent. In the preferred method of preparation the allylic crosslinking agent will be reacted with the acrylamido sulfonic acid monomer which will form the polymer during the reaction with the allylic agent. In either method of preparation the resulting product can be represented by the following idealized formula

$$A(B)_n$$

where A is the residual moiety of the allylic agent and B is the residual moiety of the homopolymer of the acrylamido-sulfonic acid monomer and n is an integer of from 2-8 dependent on the number of allylic branch in other crosslinking agent. As each allyl group is capable of crosslinking 2 polymer units n will be twice the number of allyl groups present in the crosslinking agents. The copolymerization is generally effected in an aqueous environment. The allylic crosslinking agent is employed in an amount of from about 0.005 to about 0.03% by weight of the final composition of the copolymeric produced by the crosslinking reaction, or in an amount of from about 0.005 to about 2.0% by weight of the acrylamide hydrocarbon sulfonic acid homopolymer.

Because of the instability of some of the allylic crosslinking agents to acids, the homopolymer of acrylamido hydrocarbon sulfonic acid is generally used in the form of its alkali metal or ammonium salt. Alternatively, before or after the acrylamido hydrocarbon sulfonic acid and allylic crosslinking agent have been added to the aqueous polymerization medium, alkali metal hydroxide, ammonium hydroxide or other appropriate neutralization base is added to the solution in an amount sufficient to neutralize the acrylamido hydrocarbon sulfonic acid.

Next, a polymerization catalyst is added to the reaction mixture. The catalyst system used for catalyzing the copolymerization reaction can include a compound effective to initiate free radical formation. Since the present copolymerization reaction is generally carried out at relatively low, generally ambient temperatures, it is usually desirable to use a redox catalytic system in which an oxidizing agent serves as an initiator or activator of the reaction, and the activating action is catalyzed by the presence of a reducing agent.

The types of free radical initiators which are

suitable for use in such a redox system include ammonium peroxodisulfate, alkali metal peroxodisulfate, hydrogen peroxide, alkali metal peroxide, alkali metal and ammonium perchlorate, sodium perborate, peracetic acid.

A catalytic material which catalyzes the initiation of the copolymerization reaction is also included in the redox system. Suitable catalysts include a tertiary amine compound such as triethanolamine, β,β,β-nitrilotrispropionamide, and dimethylaminopropionitrile.

The amount of activator or oxidizing agent used in the reaction is from about 0.001 weight percent to about 0.03 weight percent, based on the weight of the acrylamido hydrocarbon sulfonic acid monomer. The amount of the catalyst used generally ranges from about 0.001 weight percent to about 0.03 weight percent, based on the weight of the acrylamido hydrocarbon sulfonic acid monomer.

The covalently crosslinked polymeric absorbent of this invention is generally prepared in the form of a dry, particulate solid. It lends itself to a variety of uses wherever superior absorbencies of aqueous fluids are required or wherever there is a need to efficiently store, transport and handle large amounts of aqueous fluids in a non-liquid, semi-solid state. Absorbencies as high as 3400 ml of water per gram of polymeric absorbent and 169 ml of synthetic urine per gram of polymeric absorbent are achieved. This represents approximately three times the levels of absorbencies achievable with starch graft polymer available commercially. Also, the present polymeric absorbent is uncontaminated by such undesirable by-products as acrylamide, acrylonitrile and residual organic solvent, all of which may be deleteriously present in the commercially available starch graft polymer.

The present novel polymeric absorbent can be mixed

with or coated on a wide variety of materials including, for example, sand, straw, sawdust, seeds, roots, natural or synthetic fibers, flour, gelatin and starch. Its aqueous fluid retention properties are thus beneficial in absorbent softgoods, agricultural areas and other areas where superior aqueous fluid absorbency is required. More specifically, typical uses include disposable diapers, catamenial devices (sanitary napkins and tampons), hospital and surgical pads and sponges, coatings for animal litter and seed. It can also be used as a binder in sand molds for metal castings. It aids in the prevention of wind and water erosion of sandy soil surfaces. The growth of, for example, grains and grasses in sandy soils can measurably be enhanced by treatment of the soil with the present polymeric absorbent. This new polymeric absorbent can also be used in procedures requiring water extraction and concentration of solids, such as separating proteins from aqueous solutions and concentrating solids from milk and from oil-water emulsions.

Further, the polymeric absorbent of the present invention can be used to enable efficient storage, transportation and handling of aqueous fluids in large volumes. For example, the polymeric absorbent of the present invention can gel water to facilitate handling of industrial and animal wastes, mud and sewage sludge, by converting these wastes into a form that can be handled and maneuvered without undesirable run off.

The covalently crosslinked polymeric absorbent of the instant invention is further used to aid retention of starch in paper manufacture, to immobilize enzymes, reducing their loss in industrial fermentations, and to encapsulate fertilizers. It is also suitable for use in the paper manufacturing industry with unmodified starch as a wet end additive. In the carpeting industry, the present novel absorbent can be used as a dyestuff thickener in carpet coloration, printing and dyeing.

## EXAMPLES



The following examples illustrate the preparation of a variety of covalently crosslinked polymeric absorbents according to the present invention. In the examples the fluid absorbency is the grams of fluid absorbed per gram of sample. It is determined by dispersing a weighed sample in a weighed amount of aqueous fluid and collecting and weighing the fluid passing through a standard stainless steel sieve (100 mesh for water, 200 mesh for saline solution). The weight of fluid retained is then calculated and divided by the sample weight to yield fluid absorbency in g/g.

### EXAMPLE 1

There was dissolved 14.70 grams of the sodium salt of 2-acrylamido-2-methylpropane sulfonic acid in 83.00 grams of deionized water for a time sufficient to completely dissolve the monomer. Then 0.30 grams of triallyl cyanurate crosslinking agent was added. The solution was then purged by bubbling nitrogen through from the bottom with a sparge tupe. The following catalysts were added: 1.5 ml of a potassium peroxodisulfate ($K_2S_2O_8$) solution, prepared by admixing 0.270 grams of potassium peroxodisulfate with 100 ml of water, and 0.5 ml of β,β,β-nitrilotrispropionamide solution, prepared by admixing 0.230 grams of β,β,β-nitrilotrispropionamide with 100 ml of water. The nitrogen sparge was continued until the development of foam on the surface of the solution indicated that the polymerization reaction had commenced. The total time of the nitrogen purge was 20 min. and the reaction starting temperature was 20°C. After 2 hours, an additional 3 ml of the $K_2S_2O_8$ solution and 1 ml of the β,β,β-nitrilotrispripionamide solution were added. The reaction was allowed to stand for approximately 15 hours until the polymerization reaction was complete.

The resulting viscous polymer solution was dried, ground and screened through a 30 mesh screen. The product absorbed 1150 ml of water per gram of dry material and 85 g of 1% NaCl solution per gram of dry material.

EXAMPLE 2

There was dissolved 7.35 grams of the sodium salt of 2-acrylamido-2-methylpropane sulfonic acid in 78.46 grams of deionized water for a time sufficient to completely dissolve the monomer. Then 5.63 grams of acrylic acid (available from Eastman) was added with 200 ppm of methyl ethyl hydroquinone (MEHQ), a free radical inhibitor. Then 3.13 grams of NaOH was added as 6.26 grams of a 50% NaOH solution and 0.30 grams of triallyl cyanurate crosslinking agent was then added. The solution was purged by bubbling nitrogen through from the bottom with a sparge tube. The catalysts were added as described in Example 1. The nitrogen sparge was continued until the development of foam on the surface of the solution indicated that the polymerization reaction had commenced. The total nitrogen purge time was 30 min. and the reaction starting temperature was 20°C. The reaction was allowed to stand until the polymerization reaction was complete. The resulting viscous polymer solution was dried, ground and screened through a 30 mesh screen. This product absorbed 1850 ml water per gram of dry material and 101 ml of synthetic urine per gram of dry material.

EXAMPLE 3

Following the procedure and amounts of reagents described in Example 1, the sodium salt of 2-acrylamido-2-methylpropane sulfonic acid was dissolved in deionized water, and 0.30 grams of N,N-diallylmelamine crosslinking agent was added. The solution was purged with nitrogen, and catalysts were added as described in

Example 1. Nitrogen purge was continued after the addition of catalysts, so that the total nitrogen purge time was 30 min. The reaction starting temperature was 25°C. After the completion of the polymerization reaction, the polymer product was dried, ground and screened through a 30 mesh screen. This product absorbed 1928 ml of water per gram of dry material and 88 ml of synthetic urine per gram of dry material.

EXAMPLE 4

Following the same procedure as described in Example 1, 14.70 grams of ammonium 2-acrylamido-2-methylpropane sulfonic acid salt was dissolved in 83.00 grams of deionized water, and 0.30 grams of triallyl phosphate crosslinking agent was added. The solution was purged with nitrogen, and the catalysts were added as prepared in Example 1. Nitrogen purge was continued for a total nitrogen purge time of 30 min. The reaction starting temperature was 25°C. The product obtained at the completion of the polymerization reaction was dried, ground and screened through a 30 mesh screen. This product absorbed 1760 ml of water per gram of dry material and 89 ml of synthetic urine per gram of dry material.

EXAMPLE 5

There was dissolved 47 grams of 2-acrylamido-2-methylpropane sulfonic acid in 133.8 grams of deionized water. Then 18.2 grams of a 50% NaOH solution and 0.1 gram of triallyl phosphate crosslinker were added. A nitrogen sparge tube was inserted to purge the solution of oxygen. Catalysts were the added; 0.4 ml of 0.3% $H_2O_2$ solution and 0.6 ml of 0.1 M $FeSO_4 \cdot 7H_2O$. After the completion of the polymerization reaction, the obtained gel was dried, ground and screened through a fine mesh screen. This product absorbed 2224 ml of water per gram of dry material and 128 g of a 1% NaCl solution per gram of dry material.

0216147

EXAMPLE 6

Following the procedure and amounts of reagent as described in Example 5, 2-acrylamido-2-methylpropane sulfonic acid was dissolved in deionized water and 50% NaOH solution was added. The crosslinking agent was 1 gram of tetraallyloxyethane. A nitrogen sparge tube was used to purge the reaction solution. The catalysts were introduced as in Example 5. The gel obtained upon completion of the polymerization reaction was dried, ground and screened. The product absorbed 856 g of water per gram of dry material and 48 g of a 1% NaCl solution per gram of dry material.

EXAMPLE 7

There was added 47 grams of 2-acrylamido-2-methylpropane sulfonic acid to 133.6 grams of deionized water and the solution was stirred on an ice bath until complete dissolution of the monomer had been achieved. Then 50% NaOH was added to achieve pH = 1.8-2.0, after which 0.03 grams of N,N'methylene bisacrylamide crosslinker was added. A nitrogen sparge tube was inserted to purge the solution of oxygen for 10-20 min. The catalysts were added as in Example 6. Upon completion of the polymerization, the solution was allowed to stand for about 20 min. The resulting gel was dried, ground and screened. This product absorbed 3403 ml of water per gram of dry material and 147 g of a 1% NaCl solution per gram of dry material.

EXAMPLE 8

According to the procedure used in Example 7, 47 grams of 2-acrylamido-2-methylpropane sulfonic acid was dissolved in 144.14 grams of deionized water. $NH_4OH$ was added to reach pH = 1.8-2.0. 1 gram of dimethylpropyl methacrylamide crosslinking agent was used. The nitrogen sparge was introduced. The catalysts were added as in Example 6. The gel obtained upon completion of the polymerizaion was dried, ground and screened. This product absorbed 750 ml of water per gram of dry material and 46 ml of synthetic urine per gram of dry material.

EXAMPLE 9

Following the procedure described in Example 7, 47 grams of 2-acrylamido-2-methylpropane sulfonic acid was dissolved in 133.8 grams of deionized water. The pH of the solution was adjusted with $NH_4OH$ to 1.8-2.0. Then 0.5 gram of methacrylamido propyltrimethyl ammonium crosslinker was added. The solution was purged with nitrogen. The catalysts used were those recited in Example 6. The polymer gel which resulted was dried, ground and screened.

EXAMPLE 10

Following the procedure used in Example 7, 47 grams of 2-acrylamido-2-methylpropane sulfonic acid was dissolved in 133.8 grams of deionized water. The pH of the solution was adjusted to 1.8-2.0 with $NH_4OH$. Then 0.03 grams of N,N'-methylene bisacrylamide crosslinker was added. The nitrogen sparge was introduced. The catalysts added were as recited in Example 6. The nitrogen sparge was conducted for 10 min. and the temperature at the initiation of the polymerization was 10°C. The polymer gel obtained was dried, ground and screened. This product absorbed 2848 ml of water per gram of dry material and 164 g of a 1% NaCl solution per gram of dry material.

EXAMPLE 11

Following the procedure used in Example 7, 47 grams of 2-acrylamido-2-methylpropane sulfonic acid was dissolved in 133.8 grams of deionized water. $NH_4OH$ was used to adjust the pH of the solution to 1.8-2.0. Then 0.07 gram of N,N'-methylene bis-acrylamide crosslinker

was added. The nitrogen sparge was introduced. The catalysts used were as recited in Example 6. The nitrogen sparge was conducted for 10 min. and the temperature at the initiation of the polymerization was 10°C. The resulting polymer gel was dried, ground and screened. This product absorbed 2344 ml of water per gram of dry material and 154 g of a 1% NaCl solution per gram of dry material.

EXAMPLE 12

Following the procedure used in Example 7, 47 grams of 2-acrylamido-2-methylpropane sulfonic acid was dissolved in 133.8 grams of deionized water. The pH of the solution was adjusted to 1.8-2.0 with $NH_4OH$. Then 0.07 ml of triallyl phosphate crosslinker was added. The solution was purged with nitrogen. The catalysts added were 0.4 ml of 0.3% $H_2O_2$ solution and 0.6 ml of 0.1 M $FeSO_4 \cdot 7H_2O$ (should this molarity be 0.1 M?). The nitrogen sparge was conducted for 10 min. and the reaction initiation temperature was 10°C. The resultant polymer gel was dried, ground and screened. This product absorbed 1420 ml of water per gram of dry material and 88 g of a 1% NaCl solution per gram of dry material.

EXAMPLE 13

Following the procedure described in Example 7, 47 grams of 2-acrylamido-2-methylpropane sulfonic acid was dissolved in 133.8 grams of deionized water. The pH of the solution was adjusted to 1.8-2.0 with $NH_4OH$. Then 0.03 gram of N,N'-methylene bisacrylamide crosslinking agent was added. The nitrogen sparge was introduced. The catalysts used were 0.2 ml of 0.3% $H_2O_2$ solution and 0.3 ml of 0.1 M $FeSO_4 \cdot 7H_2O$. The total time of the nitrogen sparge was 10 min. and the temperature at the initiation of the polymerization was 10°C. The resultant polymer gel was dried, ground and screened. This

product absorbed 2770 ml of water per gram of dry material and 169 g of a 1% NaCl solution per gram of dry material.

EXAMPLE 14

There was dissolved 43.95 grams of 2-acrylamido-2-methylpropane sulfonic acid in 154.95 grams of deionized water with adequate stirring to achieve complete dissolution of the monomer and the pH adjusted to 5.5 with NaOH. Then 0.1 ml of 50% solution of N-methylolacrylamide was added. The catalysts added were as recited in Example 6. Upon completion of the polymerization, the resultant gel was dried, ground and screened. This product absorbed 2480 ml of water per gram of dry material and 146 ml of synthetic urine per gram of dry material.

EXAMPLE 15

To 43.75 grams of 2-acrylamido-2-methylpropane sulfonic acid in a glass reaction vessel was added. Deionized water and $NH_4OH$ in a total weight of 154.75 grams to achieve a pH of approximately 5.5. Then 0.5 ml of a 50% solution of N-methylolacrylamide crosslinking agent was added. A nitrogen sparge tube was inserted to purge the solution of oxygen for 10-20 minutes. The catalysts were added as recited in Example 6. The gel resulting from the polymerization was dried, ground and screened. This product absorbed 1846 ml of water per gram of dry material and 88 ml of of synthetic urine per gram of dry material.

EXAMPLE 16

There was dissolved 47 grams of 2-acrylamido-2-methylpropane sulfonic acid monomer in 133.8 grams of deionized water by stirring the solution on an ice bath to effect cooling to 10°C. The pH was adjusted to 2 by the addition of approximately 15 grams of $NH_4OH$. Then

7 drops, or approxiamtely 0.2 grams of Triton X-45 surfactant (available from R & H) and 0.1 ml of 1,6-hexandiol diacrylate (SR-238, available from Sartomer) were added. Nitrogen sparging was started while continuing to cool the solution on an ice bath. The following catalysts were added: 0.4 ml of 0.3% $H_2O_2$ solution and 0.6 ml of $FeSO_4 \cdot 7H_2O$ solution prepared by diluting 0.24 g of $FeSO_4 \cdot 7H_2O$ to 100 ml with sparged deionized water. The temperature at the start of the reaction was approximately 10°C and the ice bath was then removed. After 15 min., polymerization had not begun, so another addition of the same amount of catalysts was introduced. Sparging of the reaction solution was continued for 1 1/2 hours. After completion of the polymerization, the chunky, gel product was dried, ground and screened through a 50 mesh screen.

EXAMPLE 17

Following the procedure and amounts of reagents described in Example 16, 2-acrylamido-2-methylpropane sulfonic acid was dissolved in deionized water with ice bath cooling. The pH was adjusted to 2 with the addition of approximately 14 grams $NH_4OH$. As the cross-linking agent, 0.05 ml of triethylene glycol diacrylate (SR-272, available from Sartomer) was added. Nitrogen sparging was introduced while continuing to cool the reaction mixture on an ice bath. A single addition of catalysts was added as recited in Example 16. Polymerization began immediately upon addition of the catalysts. The reaction was allowed to continue for approximately 15 hours and the product was dried, ground and screened through a 50 mesh screen.

EXAMPLE 18

Following the procedure and amounts of reagents described in Example 16, 2-acrylamido-2-methylpropane sulfonic acid monomer was dissolved in deionized water

with ice bath cooling. The pH was adjusted to 2 with approximately 13 grams $NH_4OH$. The crosslinking agent used was 0.05 ml of tetraethylene glycol diacrylate (SR-268, available from Sartomer). Nitrogen sparging was introduced while continuing to cool the reaction mixture on an ice bath. A single addition of catalysts was added as described in Example 16. Polymerization began immediately upon introduction of the catalysts. The ice bath was removed and the temperature of the reaction rose from 10°C to 31°C in 5 min. After completion of the polymerization reaction, the product was dried, ground and screened through a 50 mesh screen.

EXAMPLE 19

Following the procedure and amounts of reagents described in Example 16, 2-acrylamido-2-methylpropane sulfonic acid monomer was dissolved in deionized water with cooling on an ice bath to 10°C. The pH of the reaction mixture was adjusted to 2 with the addition of approximately 14 grams $NH_4OH$. The crosslinking agent added was 0.05 ml of polyethylene glycol 600 dimethacrylate (SR-252, available from Sartomer). Nitrogen sparging was begun while continuing to cool the reaction mixture on an ice bath. A single addition of catalysts was added as described in Example 16. Polymerization took place almost immediately upon introduction of the catalysts. The ice bath was removed and the temperature of the reaction mixture rose from 10°C to 30°C in about 5 min. The product obtained upon completion of the polymerization was dried, ground and screened through a 50 mesh screen.

WHAT IS CLAIMED IS:

0216147

1. A super-absorbent covalently crosslinked polymer having the formula

$$A(B)_n$$

where A is the residual moeity of an allylic crosslinking agent, B is the residual moiety of the homopolymer of an acrylamido sulfonic acid monomer and n is an even integer of from 2-8.

2. A super-absorbent covalently crosslinked copolymer of

a) an acrylamido hydrocarbon sulfonic acid homopolymer having as the major recurring structural unit:

$$-(CH_2-CH(C(O)NH-R-SO_3M))-$$

wherein R is a divalent hydrocarbon group and M is a hydrogen atom, and amine group, or an alkali metal atom, and

b) an allylic crosslinking agent;

wherein the allylic crosslinking agent is present in an amount from about 0.005 percent to about 2.0 percent by weight of the copolymer reactants.

3. A super-absorbent covalently crosslinked copolymer of claim 2, wherein the acrylamido hydrocarbon sulfonic acid homopolymer is derived from 2-acrylamido-2-methylpropane sulfonic acid or an alkali metal or an amine salt thereof.

4. A super-absorbent covalently crosslinked copolymer of claim 2, wherein the allylic crosslinking agent is selected from N,N'-alkylidene bisacrylamide compounds in which the alkylidene group contains 1-3 carbon atoms, N,N-diallylmelamine, triallyl phosphate, triallyl cyanurate, tetraallyloxyethane, dimethylpropyl methacrylamide, diallyl sucrose, methacrylamide propyltrimethyl ammonium, N-methylolacrylamide, 1,6-hexanediol diacrylate, triethylene glycol diacrylate, tetraethylene glycol diacrylate, polyethylene glycol dimethacrylate.

5. A super-absorbent covalently crosslinked copolymer of claim 2, wherein the allylic crosslinking agent is N,N'methylene bisacrylamide.

6. A process of preparing a super-absorbent covalently crosslinked copolymer of
a) an acrylamido hydrocarbon sulfonic acid homopolymer having as the major recurring structural unit:

$$-(CH_2-CH(C(O)NH-R-SO_3M))-$$

wherein R is a divalent hydrocarbon group and M is a hydrogen atom, an amine group, or an alkali metal atom, and
b) an allylic crosslinking agent; comprising reacting said acrylamido hydrocarbon sulfonic acid homopolymer or a monomer precursor thereof, with from about 0.005 percent to about 2.0 percent by weight of said allylic crosslinking agent.

7. A process of claim 6, wherein the reaction is carried out in an aqueous environment.

8. A process of claim 6, wherein the reaction is carried out in the presence of a redox catalyst system.

9. A process of claim 6, wherein the acrylamido hydrocarbon sulfonic acid homopolymer is derived from 2-acrylamido-2-methylpropane sulfonic acid or an alkali metal or an amine salt thereof.

10. A process of claim 6, wherein the poly-allylic crosslinking agent is selected from N,N'-alkylidene bisacrylamide compounds in which the alkylidene group contains 1-3 carbons atoms, N,N-diallylmelamine, triallyl phosphate, triallyl cyanurate, tetraallyoxyethane, dimethylpropyl methacylamide, diallyl sucrose, methacylamide propyltrimethyl ammonium, N-methylolacrylamide, 1,6-hexanediol diacrylate, triethylene glycol diacrylate, tetraethylene glycol diacrylate, polyethylene glycol dimethacrylate.

11. A process of claim 6, wherein the poly-allylic crosslinking agent is N,N'-methylene bisacrylamide.